# EUROPEAN PATENT SPECIFICATION

(11) **EP 2 866 388 B1**
(45) Date of publication and mention of the grant of the patent: **10.07.2019**
(21) Application number: 13804913.5
(22) Date of filing: 23.07.2013
(51) Int. Cl.: H04B 10/07, H04L 12/437

(54) **METHOD FOR DETECTING CORRECTNESS OF OPTIC FIBER CONNECTION BASED ON RADIO REMOTE UNIT (RRU) LOOPED NETWORK, AND BASE BAND UNIT (BBU)**
VERFAHREN ZUR ERKENNUNG DER FEHLERFREIHEIT EINER GLASFASERVERBINDUNG AUF BASIS EINES FERNFUNKEINHEITSNETZWERKS SOWIE BASISBANDEINHEIT
PROCÉDÉ POUR DÉTECTER LA VALIDITÉ D'UNE CONNEXION À FIBRE OPTIQUE SUR LA BASE D'UN RÉSEAU À BOUCLE D'UNE UNITÉ RADIO DISTANTE (RRU), ET UNITÉ EN BANDE DE BASE (BBU)

(30) Priority: 23.07.2012 CN 201210254947
(43) Date of publication of application: 29.04.2015
(73) Proprietor: ZTE Corporation, Shenzhen, Guangdong 518057 (CN)
(72) Inventor: YAN, Cuicui, Shenzhen Guangdong 518057 (CN); JIANG, Meijuan, Shenzhen Guangdong 518057 (CN); ZHENG, Ke, Shenzhen Guangdong 518057 (CN)
(74) Representative: Savi, Massimiliano
(86) International application number: PCT/CN2013/079872
(87) International publication number: WO 2013/185673

(56) References cited:
- CN-A- 101 026 819
- CN-A- 101 860 802
- CN-A- 102 316 503
- CN-A- 102 395 133
- CN-A- 103 167 540
- US-A1- 2011 141 895
- US-A1- 2011 199 998
- US-A1- 2012 157 089

## Description

### Technical Field

The present invention relates to the radio remote unit (RRU) looped network optic fiber protection field, and in particular, to a method for detecting correctness of optic fiber connection based on the RRU looped network and a BBU.

### Background of the Related Art

The distributed Base Transceiver Station (BTS) is composed of a Radio Remote Unit (RRU) and a Base Band Unit (BBU). Transmission between the BTS and the Base Station Controller (BSC) is wired transmission, satellite transmission or microwave transmission; and the transmission between the RRU and the BBU is optic fiber transmission.

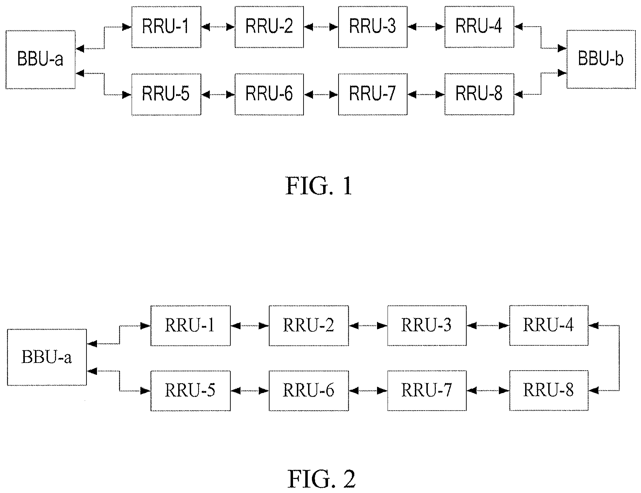

In order to improve the reliability of the distributed BTS, the RRU looped networking is applied extensively. In the RRU looped networking, multiple RRU links are bridged between the two BBUs, as shown in FIG. 1; or one RRU link is bridged on the same BBU, as shown in FIG. 2. In the RRU looped networking, when a certain optic fiber, optic fiber pair or a certain RRU fails temporarily or irretrievably because of power down, physical damage, etc., all RRUs uniformly switch to another BBU to work, or split into two RRU link-type networks, to solve the problem of the weak cover or no cover caused by the failure.

However, the networking mode is often configured and completed in the backstage Operations and Maintenance Centre (OMC), and a situation that the Information of BBU connected with the RRU link in the RRU looped networking is inconsistent with the OMC configuration is often appeared in an actual project, and then it causes that the OMC cannot operate the RRU to complete the switching or splitting when the RRU looped networking fails, and reduces the fault-tolerant capability of the RRU looped networking.

The document US 20120157089A1 discloses a method and apparatus for enabling a wireless communication service provider to remotely provide wireless network service outage and/or degradation detection, isolation, and restoration relating to a base station are disclosed. For example, the method detects a wireless service problem, and isolates the wireless service problem to a base station of a plurality of base stations of the wireless communication network, wherein the wireless service problem comprises a wireless service degradation. The method then performs a recovery task remotely on the base station to address the wireless service degradation.

### Summary of the Invention

The embodiment of the present invention provides a method for detecting correctness of optic fiber connection based on a radio remote unit (RRU) looped network and a BBU, to solve the problem on how to detect the inconsistence of the information of BBU connected to the RRU link with the OMC configuration in the RRU looped network.

In order to solve the above-mentioned technical problem, the embodiment of the present invention adopts the following technical scheme.

A method for detecting correctness of an optic fiber connection based on a radio remote unit (RRU) looped network is provided, comprising:
a local-end base band unit (BBU) receiving configured information of an opposite-end BBU connected to each RRU link thereof;
the local-end BBU sending the received information of the opposite-end BBU connected to the RRU link to the opposite-end BBU through the RRU link; and
the opposite-end BBU judging whether the information received through the RRU link is inconsistent with the information of the opposite-end BBU itself connected to the RRU link, and if inconsistent, then detecting an error of a connection between the RRU link and the opposite-end BBU itself.

Alternatively, the method further comprises:
the opposite-end BBU judging whether the local-end fails through the information received through the RRU link.

Alternatively, the step of the opposite-end BBU judging whether the local-end fails through the information received through the RRU link comprises:
the opposite-end BBU judging whether the information received through the RRU link is valid information, and if the information received through the RRU link is invalid information, then judging that the local-end BBU fails;
or,
the opposite-end BBU judging whether the information is received through the RRU link before a preset time is over, if the information is not received through the RRU link before the preset time is over, then judging that the local-end BBU fails.

Alternatively, the information of the opposite-end BBU connected to each RRU link comprises:
an optical fiber connection site number, an optical fiber interface board rack number, an optical fiber interface board shelf number, an optical fiber interface board slot number, and an optical fiber interface serial number.

Alternatively, the method further comprises:
when the opposite-end BBU detects the error of the connection between the RRU link, which is connected with the local-end BBU, and the opposite-end BBU itself or detects that the local-end BBU fails, reporting an alarm message carrying a failure reason to an operation and maintenance center (OMC).

A local-end base band unit (BBU) for detecting correctness of an optic fiber connection based on a radio remote unit (RRU) looped network is provided, wherein, the BBU comprises an information receiving module and a detection module, wherein:
the information receiving module is configured to: receive information of the BBU connected to another BBU through an RRU link sent by the other BBU through the RRU link; and
the detection module is configured to: judge whether the received information of the BBU is consistent with the information of the BBU itself, and if inconsistent, then detect an error of a connection between the RRU link and the BBU itself.

Alternatively, the detection module is further configured to: judge whether the other BBU fails through the received information of the BBU.

Alternatively, the detection module is configured to judge whether the other BBU fails through the received information of the BBU by means of:
judging whether the received information of the BBU is valid information, and if the received information of the BBU is invalid information, then judging that the other BBU fails; or,
judging whether the information of the BBU is received before a preset time is over, if the information of the BBU is not received before the preset time is over, then judging that the other BBU fails.

Alternatively, the information of the BBU connected to another BBU through an RRU link sent by the other BBU through the RRU link comprises:
an optical fiber connection site number, an optical fiber interface board rack number, an optical fiber interface board shelf number, an optical fiber interface board slot number, and an optical fiber interface serial number.

Alternatively, the BBU further comprises an alarm module, wherein:
the detection module is further configured to: send a notification to the alarm module when detecting the error of the connection between the RRU link and the BBU itself or the other BBU fails; and
the alarm module is configured to: report an alarm message carrying a failure reason to an operation and maintenance center (OMC) after receiving the notification.

In the above-mentioned technical scheme, the BBU compares the configured Information of BBU connected to another BBU through an RRU link sent by the other BBU through the RRU link with its own information, and it can detect whether the configured connection between the RRU and the BBU is consistent with the real connection between the RRU and the BBU.

### Brief Description of Drawings

FIG. 1 is a diagram of an RRU looped network;
FIG. 2 is a diagram of another RRU looped network;
FIG. 3 is a flow chart of a method for detecting correctness of an optic fiber connection based on a radio remote unit (RRU) looped network of the present embodiment;
FIG. 4 is a diagram of an optic fiber connection in an RRU looped network structure of a first application example;
FIG. 5 is a diagram of an optic fiber connection in an RRU looped network structure of a second application example;
FIG. 6 is a structure diagram of a BBU for detecting correctness of an optic fiber connection based on an RRU looped network of the present embodiment.

### Preferred Embodiments of the Invention

In order to make the objective, technical scheme and advantage of the present invention much more clear and obvious, the embodiment of the present invention is described in detail with reference to the accompanying drawings hereinafter. It should be illustrated that, in the case of not conflicting, the embodiments in the present application and features in these embodiments can be combined with each other.

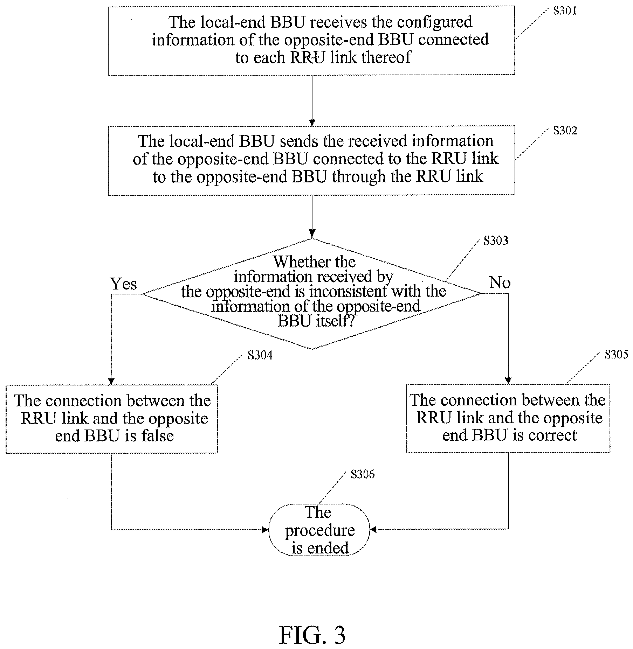

FIG. 3 is a flow chart of a method for detecting correctness of an optic fiber connection based on a radio remote unit (RRU) looped network of the present embodiment.

In S301, a local-end base band unit (BBU) receives configured information of an opposite-end BBU connected to each RRU link thereof.

The information of the opposite-end BBU connected to each RRU link can include: an optical fiber connection site number, an optical fiber interface board rack number, an optical fiber interface board shelf number, an optical fiber interface board slot number, and an optical fiber interface serial number.

The information of the opposite-end BBU connected to each RRU link of the above-mentioned local-end BBU can be sent to the local-end BBU by the OMC.

In S302, the local-end BBU sends the received information of the opposite-end BBU connected to the RRU link to the opposite-end BBU through the RRU link.

In S303, the opposite-end BBU judges whether the information received through the RRU link is inconsistent with the information of the opposite-end BBU itself connected to the RRU link, and if inconsistent, then step S304 is executed; or else, step S305 is executed.

In S304, it is determined that the connection between the RRU link and the opposite-end BBU itself is false, and step S306 is executed.

In S305, it is determined that the connection between the RRU link and the opposite-end BBU itself is correct, and step S306 is executed.

In S306, the procedure is ended.

The opposite-end BBU of the above-mentioned embodiment further can judge whether the local-end fails through the information received through the RRU link. The opposite-end BBU judges whether the information received through the RRU link is valid information, and if the information received through the RRU link is invalid information, then the local-end BBU fails; or, the opposite-end BBU judges whether the information is received through the RRU link before a preset time is over, if the information is not received through the RRU link before the preset time is over, then the local-end BBU fails.

When the opposite-end BBU detects the error of the connection between the RRU link connected to the local-end BBU and the BBU itself or the local-end BBU fails, it can further report an alarm message carrying a failure reason to an operation and maintenance center (OMC), so that the skills in the art find the failure and grasp the failure reason in time.

The above-mentioned embodiment is further illustrated in detail with two specific application examples.

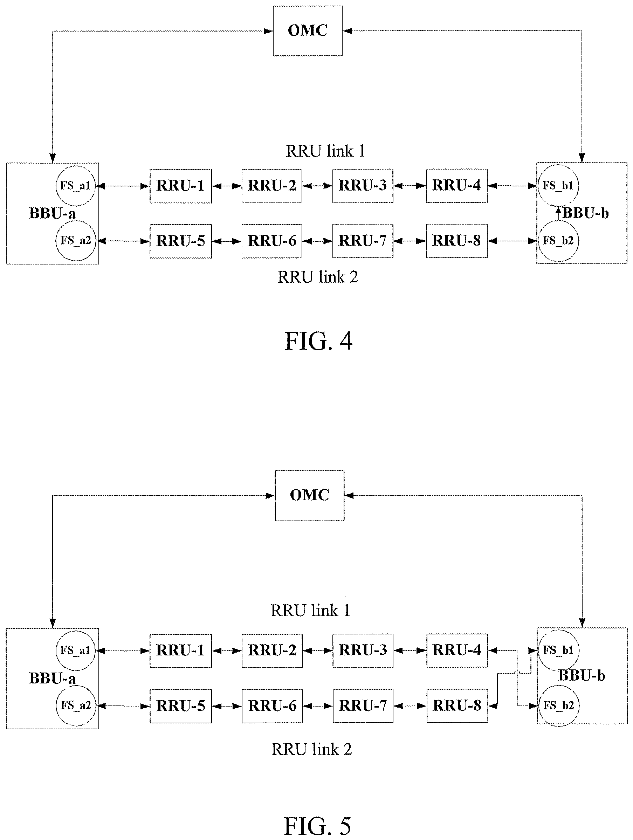

FIG. 4 is a diagram of an optic fiber connection in an RRU looped network structure of a first application example.

Based on the optic fiber link, the steps of the method for detecting the correctness of the optic fiber connection are as follows.

In step one, the OMC sends information, configured by itself, of the BBU-b connected to the BBU-a through the RRU link 1 and the RRU link 2 to the BBU-a, and sends information, configured by itself, of the BBU-a connected to the BBU-b through the RRU link 1 and the RRU link 2 to the BBU-b.

The information of the BBU-b connected to the BBU-a through the RRU link 1 sent by the OMC to the BBU-a is: the optical fiber connection site number (FS_b1_SITE_id), the optical fiber interface board rack number (FS_b1_rack), the optical fiber interface board shelf number (FS_b1_shelf), the optical fiber interface board slot number (FS_b1_slot), and the optical fiber interface serial number (FS_b1_port).

The information of the opposite-end BBU-b connected to the BBU-a through the RRU link 2 sent by the OMC to the BBU-a is: the optical fiber connection site number (FS_b2_SITE_id), the optical fiber interface board rack number (FS_b2_rack), the optical fiber interface board shelf number (FS_b2_shelf), the optical fiber interface board slot number (FS_b2_slot), and the optical fiber interface serial number (FS_b2_port).

The OMC sends information, configured by itself, of the BBU-a connected to the BBU-b through the RRU link 1 and the RRU link 2 to the BBU-b, which will not be described in detail any more.

In step two, the BBU-a sends the received information of the BBU-b to the BBU-b through the RRU link 1, including: the optical fiber connection site number (FS_b1_SITE_id), the optical fiber interface board rack number (FS_b1_rack), the optical fiber interface board shelf number (FS_b1_shelf), the optical fiber interface board slot number (FS_b1_slot), and the optical fiber interface serial number (FS_b1_port); the BBU-a sends the received information of the BBU-b to the BBU-b through the RRU link 2, including: the optical fiber connection site number (FS_b2_SITE_id), the optical fiber interface board rack number (FS_b2_rack), the optical fiber interface board shelf number (FS_b2_shelf), the optical fiber interface board slot number (FS_b2_slot), and the optical fiber interface serial number (FS_b2_port).

The BBU-b sends the received information of the BBU-a to the BBU-a through the RRU link 1 and the RRU link 2 as well.

In step three, the BBU-b compares the information received through the RRU link 1 with the information of the BBU-b itself connected to the RRU link 1, and finds that the two are consistent, so it is detected that the connection between the RRU link 1 and the BBU-b itself is correct; and the BBU-b compares the information received through the RRU link 2 with the information of the BBU-b itself connected to the RRU link 2, and finds the two are consistent, so it is detected that the connect between the RRU link 2 and the BBU-b itself is correct.

The BBU-a compares the information received through the RRU link 1 and the RRU link 2 with the information of the BBU-a itself connected to the RRU link 1 and the RRU link 2 as well, and through comparing, judges that the RRU link 1 and the RRU link 2 are connected with the BBU-a correctly.

Through the above-mentioned detection steps, it can confirm that the connection between the BBU and the RRU in the RRU looped networking is correct.

FIG. 5 is a diagram of an optic fiber connection in an RRU looped network structure of a second application example.

Based on the optic fiber link, the steps of the method for detecting the correctness of the optic fiber connection are as follows.

In step one, the OMC sends information, configured by itself, of the BBU-b connected to the BBU-a through the RRU link 1 and the RRU link 2 to the BBU-a, and sends information , configured by itself, of the BBU-a connected to the BBU-b through the RRU link 1 and the RRU link 2 to the BBU-b.

The information of the BBU-b connected to the BBU-a through the RRU link 1 sent by the OMC to the BBU-a is: the optical fiber connection site number (FS_b1_SITE_id), the optical fiber interface board rack number (FS_b1_rack), the optical fiber interface board shelf number (FS_b1_shelf), the optical fiber interface board slot number (FS_b1_slot), and the optical fiber interface serial number (FS_b1_port).

The information of the opposite-end BBU-b connected to the BBU-a through the RRU link 2 sent by the OMC to the BBU-a is: the optical fiber connection site number (FS_b2_SITE_id), the optical fiber interface board rack number (FS_b2_rack), the optical fiber interface board shelf number (FS_b2_shelf), the optical fiber interface board slot number (FS_b2_slot), and the optical fiber interface serial number (FS_b2_port).

The OMC sends information, configured by itself, of the BBU-a connected to the BBU-b through the RRU link 1 and the RRU link 2 to the BBU-b, which will not be described in detail any more.

In step two, the BBU-a sends the received information of the BBU-b to the BBU-b through the RRU link 1, including: the optical fiber connection site number (FS_b1_SITE_id), the optical fiber interface board rack number (FS_b1_rack), the optical fiber interface board shelf number (FS_b1_shelf), the optical fiber interface board slot number (FS_bl_slot), and the optical fiber interface serial number (FS_b1_port); the BBU-a sends the received information of the BBU-b to the BBU-b through the RRU link 2, including: the optical fiber connection site number (FS_b2_SITE_id), the optical fiber interface board rack number (FS_b2_rack), the optical fiber interface board shelf number (FS_b2_shelf), the optical fiber interface board slot number (FS_b2_slot), and the optical fiber interface serial number (FS_b2_port).

The BBU-b sends the received information of the BBU-a to the BBU-a through the RRU link 1 and the RRU link 2 as well.

In step three, the BBU-b compares the information received through the RRU link 1 with the information of the BBU-b itself connected to the RRU link 1, and finds that the two are inconsistent, so it is detected that the connection between the RRU link 1 and the BBU-b itself is false; and the BBU-b compares the information received through the RRU link 2 with the information of the BBU-b itself connected to the RRU link 2, and finds the two are inconsistent, so it is detected that the connect between the RRU link 2 and the BBU-b itself is false.

The BBU-a compares the information received through the RRU link 1 and the RRU link 2 with the information of the BBU-a itself connected to the RRU link 1 and the RRU link 2 as well, and through comparing, judges that the RRU link 1 and the RRU link 2 are connected with the BBU-a falsely.

Through the above-mentioned detection steps, it can be determined that the connection between the BBU and the RRU in the RRU looped networking is false.

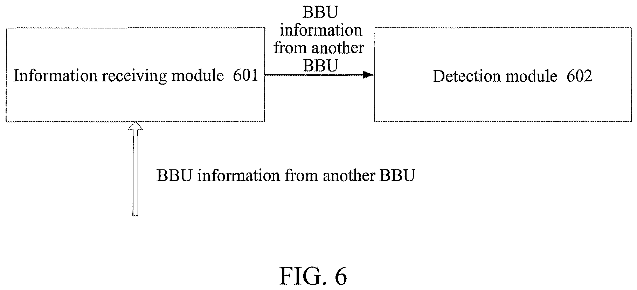

FIG. 6 is a structure diagram of a BBU for detecting correctness of an optic fiber connection based on an RRU looped network of the present embodiment.

The BBU includes an information receiving module 601 and a detection module 602, wherein:
the information receiving module 601 is configured to: receive information of the BBU connected to another BBU through an RRU link sent by the other BBU through the RRU link.

The information of the BBU connected to another BBU through an RRU link sent by the other BBU through the RRU link includes: an optical fiber connection site number, an optical fiber interface board rack number, an optical fiber interface board shelf number, an optical fiber interface board slot number, and an optical fiber interface serial number.

The detection module 602 is configured to: judge whether the received information of the BBU is consistent with the information of the BBU itself, and if inconsistent, then detect an error of the connection between the RRU link and the BBU itself.

The above-mentioned detection module 602 is further configured to: judge whether the other BBU fails through the received information of the BBU, including: judging whether the received Information of the BBU is valid information, and if the received information of the BBU is invalid information, then judge that the other BBU fails; or, judge whether the information of the BBU is received before a preset time is over, if the information of the BBU is not received before the preset time is over, then judge the other BBU fails.

The BBU in the present embodiment further includes an alarm module; and the above-mentioned detection module can be configured to: send a notification to the alarm module when detecting the error of the connection between the RRU link and the BBU itself or the other BBUs fail; and the alarm module is configured to: report an alarm message carrying a failure reason to an operation and maintenance center (OMC) after receiving the notification.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limit to any specific form of the combination of the hardware and software.

It needs to be illustrated that the present invention can have a variety of other embodiments. Those skilled in the art can make the corresponding modifications and variations according to the present invention without departing from the spirit and essence of the present invention.

### Industrial Applicability

In the above-mentioned technical scheme, the BBU compares the configured Information of BBU connected to another BBU through an RRU link sent by the other BBU through the RRU link with its own information, and it can detect whether the configured connection between the RRU and the BBU is consistent with the real connection between the RRU and the BBU. Therefore, the present invention has very strong industrial applicability.

## Claims

1. A method for detecting correctness of an optic fiber connection based on a radio remote unit (RRU) looped network, **characterized by** comprising:
a local-end base band unit (BBU) receiving (S301) configured information of an opposite-end BBU connected to each RRU link thereof;
the local-end BBU sending (S302) the received information of the opposite-end BBU connected to each RRU link to the opposite-end BBU through each RRU link; and
the opposite-end BBU judging (S303) whether the information received through the RRU links is inconsistent with the information of the opposite-end BBU itself connected to the RRU links, and if information received over a RRU link is inconsistent, then detecting (S304) an error of the connection between this RRU link and the opposite-end BBU itself.

2. The method according to claim 1, further comprising:
the opposite-end BBU judging whether the local-end fails through the information received through the RRU link.

3. The method according to claim 2, wherein, the step of the opposite-end BBU judging whether the local-end fails through the information received through the RRU link comprises:
the opposite-end BBU judging whether the information received through the RRU link is valid information, and if the information received through the RRU link is invalid information, then judging that the local-end BBU fails;
or,
the opposite-end BBU judging whether the information is received through the RRU link before a preset time is over, if the information is not received through the RRU link before the preset time is over, then judging that the local-end BBU fails.

4. The method according to claim 3, wherein, the information of the opposite-end BBU connected to each RRU link comprises:
an optical fiber connection site number, an optical fiber interface board rack number, an optical fiber interface board shelf number, an optical fiber interface board slot number, and an optical fiber interface serial number.

5. The method according to claim 4, further comprising:
when the opposite-end BBU detects the error of the connection between the RRU link, which is connected with the local-end BBU, and the opposite-end BBU itself or detects that the local-end BBU fails, reporting an alarm message carrying a failure reason to an operation and maintenance center (OMC).

6. A local-end base band unit (BBU) for detecting correctness of an optic fiber connection based on a radio remote unit (RRU) looped network, wherein, the BBU comprises an information receiving module and a detection module, **characterized in that**:
the information receivingmodule is configured to: receive (S301) information of the BBU connected to another BBU through an RRU link sent by the other BBU through the RRU link; and
the detection module is configured to: judge (S303) whether the received information of the BBU is consistent with the information of the BBU itself, and if inconsistent, then detect an error of the connection between the RRU link and the BBU itself.

7. The BBU according to claim 6, wherein:
the detection module is further configured to: judge whether the other BBU fails through the received information of the BBU.

8. The BBU according to claim 7, wherein, the detection module is configured to judge whether the other BBU fails through the received information of the BBU by means of:
judging whether the received information of the BBU is valid information, and if the received information of the BBU is invalid information, then judging that the other BBU fails; or,
judging whether the information of the BBU is received before a preset time is over, if that information of the BBU is not received before the preset time is over, then judging that the other BBU fails.

9. The BBU according to claim 8, wherein, the information of the BBU connected to another BBU through an RRU link sent by the other BBU through the RRU link comprises:
an optical fiber connection site number, an optical fiber interface board rack number, an optical fiber interface board shelf number, an optical fiber interface board slot number, and an optical fiber interface serial number.

10. The BBU according to claim 9, further comprising an alarm module, wherein:
the detection module is further configured to: send a notification to the alarm module when detecting the error of the connection between the RRU link and the BBU itself or the other BBU fails; and
the alarm module is configured to: report an alarm message carrying a failure reason to an operation and maintenance center (OMC) after receiving the notification.

## Patentansprüche

1. Verfahren zum Erfassen der Fehlerfreiheit einer Glasfaserverbindung basierend auf einem Schleifen-Netzwerk einer Funkferneinheit (RRU), **dadurch gekennzeichnet, dass** es Folgendes umfasst:
Empfangen (S301) konfigurierter Informationen einer gegenüberliegenden BBU durch eine lokale Basisband-Einheit (BBU), die mit jeder RRU-Verknüpfung davon verbunden ist,
das Senden (S302) durch die lokale Basisband-Einheit (BBU) der empfangenen Informationen der gegenüberliegenden BBU, die mit jeder RRU-Verbindung mit der gegenüberliegenden BBU über jede RRU-Verbindung verbunden sind; und
die entgegengesetzte BBU beurteilt (S303), ob die über die RRU-Links empfangenen Informationen mit den Informationen der entgegengesetzten BBU selbst, die mit den RRU-Links verbunden ist, unvereinbar sind, und wenn die über eine RRU-Linie empfangenen Informationen unvereinbar sind, dann erkennt (S304) einen Fehler in der Verbindung zwischen dieser RRU-Linie und der entgegengesetzten BBU selbst.

2. Verfahren nach Anspruch 1, ferner umfassend:
Beurteilen durch die entgegengesetzte BBU, ob die lokale Seite durch die über die RRU-Verknüpfung empfangenen Informationen versagt.

3. Verfahren nach Anspruch 2, wobei der Schritt des Beurteilens durch die gegenüberliegende BBU, ob die lokale Seite durch die über die RRU-Verknüpfung empfangenen Informationen versagt, Folgendes umfasst:
Beurteilen durch die entgegengesetzte BBU, ob die über die RRU-Verknüpfung empfangenen Informationen gültige Informationen sind, und falls die über die RRU-Verknüpfung empfangenen Informationen ungültige Informationen sind, dann Beurteilen, dass die lokale BBU versagt,
oder
Beurteilen durch die entgegengesetzte BBU, ob die Informationen über die RRU-Verknüpfung empfangen werden, bevor eine voreingestellte Zeit abgelaufen ist, und falls die Informationen nicht über die RRU-Verknüpfung empfangen werden, bevor die voreingestellte Zeit abgelaufen ist, dann Beurteilen, dass die lokale BBU versagt.

4. Verfahren nach Anspruch 3, wobei die Informationen der gegenüberliegenden BBU, die mit jeder RRU-Verknüpfung verbunden ist, Folgendes umfassen:
eine Standortnummer für die Glasfaserverbindung, eine Racknummer für die Glasfaserschnittstellenkarte, eine Regalnummer für die Glasfaserschnittstellenkarte, eine Slotnummer für die Glasfaserschnittstellenkarte und eine Seriennummer für die Glasfaserschnittstelle.

5. Verfahren nach Anspruch 4, ferner umfassend:
sobald die entgegengesetzte BBU den Verbindungsfehler zwischen der RRU-Verknüpfung, die mit der lokalen BBU verbunden ist, und der entgegengesetzten BBU selbst erkennt oder aber erkennt, dass die lokale BBU ausfällt, Melden einer Alarmnachricht mit einem Fehlergrund an eine Betriebs- und Wartungszentrale (OMC).

6. Lokale Basisband-Einheit (BBU) zum Erfassen der Fehlerfreiheit einer Glasfaserverbindung basierend auf einem Schleifen-Netzwerk einer Funkferneinheit (RRU), wobei die BBU ein Informationsempfangsmodul und ein Erkennungsmodul umfasst, **dadurch gekennzeichnet, dass**:
das Informationsempfangsmodul konfiguriert ist, um: Informationen der BBU zu empfangen (S301), die mit einer anderen BBU über eine RRU-Verknüpfung verbunden ist, die von der anderen BBU über die RRU-Verknüpfung gesendet wird, und
das Erkennungsmodul konfiguriert ist, um: zu beurteilen (S303), ob die empfangenen Informationen der BBU mit den Informationen der BBU selbst vereinbar sind, und falls sie nicht vereinbar sind, dann einen Verbindungsfehler zwischen der RRU-Verknüpfung und der BBU selbst zu erkennen.

7. BBU nach Anspruch 6, wobei:
das Erkennungsmodul ferner konfiguriert ist, um: zu beurteilen, ob die andere BBU durch die empfangenen Informationen der BBU versagt.

8. BBU nach Anspruch 7, wobei das Erkennungsmodul konfiguriert ist, um zu beurteilen, ob die andere BBU durch die empfangenen Informationen der BBU versagt, durch:
Beurteilen, ob die empfangenen Informationen der BBU gültige Informationen sind, und falls die empfangenen Informationen der BBU ungültige Informationen sind, dann Beurteilen, dass die andere BBU versagt, oder,
Beurteilen, ob die Informationen der BBU empfangen werden, bevor eine voreingestellte Zeit abgelaufen ist, und falls diese Informationen der BBU nicht empfangen werden, bevor die voreingestellte Zeit abgelaufen ist, dann Beurteilen, dass die andere BBU versagt,

9. BBU nach Anspruch 8, wobei die Informationen der BBU, die mit einer anderen BBU über eine RRU-Verknüpfung verbunden ist, die von der anderen BBU über die RRU-Verknüpfung gesendet werden, Folgendes umfassen:
eine Standortnummer für die Glasfaserverbindung, eine Racknummer für die Glasfaserschnittstellenkarte, eine Regalnummer für die Glasfaserschnittstellenkarte, eine Slotnummer für die Glasfaserschnittstellenkarte und eine Seriennummer für die Glasfaserschnittstelle.

10. BBU nach Anspruch 9, ferner umfassend ein Alarmmodul, wobei:
das Erkennungsmodul ferner konfiguriert ist, um: eine Benachrichtigung an das Alarmmodul zu senden, sobald es den Verbindungsfehler zwischen der RRU-Verknüpfung und der BBU selbst erkennt oder die andere BBU ausfällt, und
das Alarmmodul konfiguriert ist, um: nach dem Empfangen der Benachrichtigung eine Alarmnachricht mit einem Fehlergrund an eine Betriebs- und Wartungszentrale (OMC) zu melden.

## Revendications

1. Un procédé pour détecter l'exactitude d'une connexion de fibre optique sur la base d'un réseau en boucle d'unité distante radio (RRU), **caractérisé en ce qu'**il comprend :
la réception (S301) par une unité de bande de base (BBU) d'extrémité locale d'informations configurées d'une BBU d'extrémité opposée connectée à chaque liaison RRU de celle-ci ;
l'envoi (S302) par la BBU d'extrémité locale des informations reçues de la BBU d'extrémité opposée connectée à chaque liaison RRU à la BBU d'extrémité opposée par le biais de chaque liaison RRU ; et
l'estimation (S303) par la BBU d'extrémité opposée de savoir si les informations reçues par le biais des liaisons RRU ne sont pas cohérentes avec les informations de la BBU d'extrémité opposée elle-même connectée aux liaisons RRU, et si les informations reçues sur une liaison RRU sont incohérentes, alors la détection (S304) d'une erreur de la connexion entre cette liaison RRU et la BBU d'extrémité opposée elle-même.

2. Le procédé selon la revendication 1, comprenant en outre :
l'estimation par la BBU d'extrémité opposée de savoir si l'extrémité locale échoue par le biais des informations reçues par le biais de la liaison RRU.

3. Le procédé selon la revendication 2, dans lequel, l'étape consistant pour la BBU d'extrémité opposée à estimer si l'extrémité locale échoue par le biais d'informations reçues par le biais de la liaison RRU comprend :
l'estimation par la BBU d'extrémité opposée de savoir si les informations reçues par le biais de la liaison RRU sont des informations valides, et si les informations reçues par le biais de la liaison RRU sont des informations invalides, alors l'estimation que la BBU d'extrémité locale échoue ;
ou,
l'estimation par la BBU d'extrémité opposée de savoir si les informations sont reçues par le biais de la liaison RRU avant un laps de temps prédéfini, si les informations ne sont pas reçues par le biais de la liaison RRU avant que le temps prédéfini ne soit écoulé, alors l'estimation que la BBU d'extrémité locale échoue.

4. Le procédé selon la revendication 3, dans lequel, les informations de la BBU d'extrémité opposée connectée à chaque liaison RRU comprennent :
un numéro de site de connexion de fibre optique, un numéro de bâti de carte d'interface de fibre optique, un numéro d'étagère de carte d'interface de fibre optique, un numéro de fente de carte d'interface de fibre optique, et un numéro de série d'interface de fibre optique.

5. Le procédé selon la revendication 4, comprenant en outre :
lorsque la BBU d'extrémité opposée détecte l'erreur de la connexion entre la liaison RRU, qui est connectée à la BBU d'extrémité locale, et la BBU d'extrémité opposée elle-même ou détecte que la BBU d'extrémité locale échoue, le rapport d'un message d'alarme portant une raison d'échec à un centre d'exploitation et de maintenance (OMC).

6. Une unité de bande de base (BBU) d'extrémité locale pour détecter l'exactitude d'une connexion de fibre optique sur la base d'un réseau en boucle d'unité radio distante (RRU), la BBU comprenant un module de réception d'informations et un module de détection, **caractérisée en ce que** :
le module de réception d'informations est configuré pour: recevoir (S301) des informations de la BBU connectée à une autre BBU par le biais d'une liaison RRU envoyées par l'autre BBU par le biais de la liaison RRU ; et
le module de détection est configuré pour: estimer (S303) si les informations reçues de la BBU sont cohérentes avec les informations de la BBU elle-même et, si elles ne sont pas cohérentes, détecter alors une erreur de la connexion entre la liaison RRU et la BBU elle-même.

7. La BBU selon la revendication 6, dans laquelle :
le module de détection est en outre configuré pour: estimer si l'autre BBU échoue par le biais des informations reçues de la BBU.

8. La BBU selon la revendication 7, dans laquelle, le module de détection est configuré pour estimer si l'autre BBU échoue par le biais des informations reçues de la BBU au moyen de :
l'estimation de savoir si les informations reçues de la BBU sont des informations valides, et si les informations reçues de la BBU sont des informations invalides, alors l'estimation que l'autre BBU échoue ; ou,
l'estimation de savoir si les informations de la BBU sont reçues avant un laps de temps prédéfini, et si ces informations de la BBU ne sont pas reçues avant que le temps prédéfini ne soit écoulé, alors l'estimation que l'autre BBU échoue.

9. La BBU selon la revendication 8, dans laquelle, les informations de la BBU connectée à une autre BBU par le biais d'une liaison RRU envoyée par l'autre BBU par le biais de la liaison RRU comprennent :
un numéro de site de connexion de fibre optique, un numéro de bâti de carte d'interface de fibre optique, un numéro d'étagère de carte d'interface de fibre optique, un numéro de fente de carte d'interface de fibre optique, et un numéro de série d'interface de fibre optique

10. La BBU selon la revendication 9, comprenant en outre un module d'alarme, dans lequel :
le module de détection est en outre configuré pour: envoyer une notification au module d'alarme lors de la détection de l'erreur de la connexion entre la liaison RRU et la BBU elle-même ou l'autre BBU échoue ; et
le module d'alarme est configuré pour: rapporter un message d'alarme portant une raison d'échec à un centre d'exploitation et de maintenance (OMC) après réception de la notification.
